Europäisches Patentamt

European Patent Office

Office européen des brevets

(11) Publication number: **0 243 084 B1**

# EUROPEAN PATENT SPECIFICATION

(45) Date of publication of patent specification: **16.02.94**   (51) Int. Cl.⁵: **G06F 9/44**, G06F 9/42

(21) Application number: **87303327.8**

(22) Date of filing: **15.04.87**

(54) **Computer system having delayed save on procedure calls.**

(30) Priority: **21.04.86 US 854219**

(43) Date of publication of application:
**28.10.87 Bulletin 87/44**

(45) Publication of the grant of the patent:
**16.02.94 Bulletin 94/07**

(84) Designated Contracting States:
**DE FR GB**

(56) References cited:

**PROCEEDINGS OF THE ACM SIGPLAN 85, Seattle, 25th - 28th June 1985, vol. 20, no. 7, July 1985, pages 179-190, ACM, New York, US; N. FRANCEZ et al.: "An environment for logic programming"**

**COMPUTER JOURNAL, vol. 28, no. 4, August 1985, pages 375-378, London, GB; A. RAMSAY: "On efficient context switching"**

**THE 12TH ANNUAL INTERNATIONAL SYMPOSIUM ON COMPUTER ARCHITECTURE, Boston, Massachusetts, 17th - 19th June 1985, pages 76-83, IEEE, New York, US; D.A. MOON: "Architecture of the symbolic 3600"**

(73) Proprietor: **TEXAS INSTRUMENTS INCORPORATED**
**13500 North Central Expressway**
**Dallas Texas 75265(US)**

(72) Inventor: **Srivastava, Aditya**
**901 S.Coit Apt. 202**
**Richardson**
**Texas 75080(US)**

(74) Representative: **Abbott, David John et al**
**Abel & Imray**
**Northumberland House**
**303-306 High Holborn**
**London, WC1V 7LH (GB)**

**Description**

BACKGROUND AND SUMMARY OF THE INVENTION

The present invention relates generally to computer systems and more specifically to a system for delaying storage of certain information when making procedure calls.

Logic programming languages such as PROLOG, because of a method of execution known as backtracking, must save the current machine state many times. This is because such programs execute by searching all alternatives when making procedure calls. When new alternatives are checked the current machine state must be saved so that it can be restored if that particular search is not successful, ie., does not return a match, so that the search can be continued with another clause.

The fact that PROLOG-type languages make an extremely high number of non-deterministic procedure calls is an important contributor to the low performance typically achieved by PROLOG programs. It would be desirable for a PROLOG program to decrease the time and effort required to save the machine state when making a non-deterministic procedure call.

It is therefore an object of the present invention to improve performance of the execution of PROLOG-type languages by decreasing the system time used to make procedure calls.

According to the present invention there is provided a method for making non-deterministic procedure calls in a programming language using backtracking in a computer system, comprising the steps of:

(a) saving a first portion of information necessary to return from the procedure calls;
(b) entering the procedure;
(c) after step (b), determining whether a second portion of information necessary to do backtracking must also be saved; and
(d) saving or discarding the second portion of information in accordance with the determination of step (c).

Therefore, according to the present invention, the machine state is not saved when a procedure call is made. In some instances, portions of the information which are saved to define the machine state can be discarded. When saving of the machine state is delayed, encountering a situation which would delete that saved information means that it need not be saved at all. This improves overall system performance.

The novel features which characterize the present invention are defined by the appended claims. The foregoing and other objects and advantages of the present invention will hereafter appear, and for purposes of illustration, but not of limitation: a preferred embodiment is shown in the accompanying drawings.

BRIEF DESCRIPTION OF THE DRAWINGS

Figure 1 is a block diagram of a processing system;
Figure 2 is a memory map of a choice point object and a procedure frame; and
Figure 3 shows generic clauses relevant to the present invention.

DESCRIPTION OF THE PREFERRED EMBODIMENT

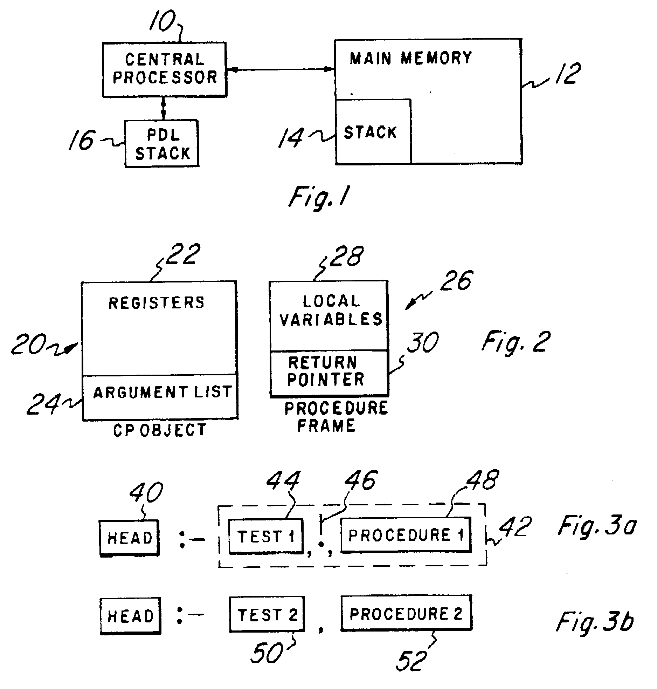

Since PROLOG and related languages make an extremely large number of procedure calls during execution, an execution scheme which decreases the amount of system overhead necessary to make a procedure call can substantially increase the performance of the system. Such a technique will now be described in relation to Figure 1 and Figure 2.

Referring to Figure 1, a central processor 10 is coupled to a main memory 12. The exact composition of the main memory 12 is not relevant to the present invention, but typically consists of a small, fast cache memory, a larger, slower semiconductor RAM and a mass storage device such as a disk (not shown). The main memory 12 is typically a virtual memory which acquires that information within the virtual address space of the memory be paged to and from the disk.

A part of the main memory space is reserved for the system stack 14. This is a data structure where the system stores, among other things, information which is used to restore the state of the processor 10 upon return from a procedure call. Since it is part of the main memory, information on the stack may, from time to time, be paged to and from the mass storage device. Also coupled to the central processor is a PDL stack 16, which is a small amount of very high speed memory coupled directly to the processor 10.

In prior art systems, when a non-deterministic procedure call is made, all information necessary to restore the processor to its current state is stored onto the stack 14. The data objects which must be stored to accomplish this is shown in Figure 2. One data object is the Choice-Point Object 20 (CP Object) which contains the contents of the machine registers 22, and the argument list 24 to be passed to be called procedure. The second object to be saved is the procedure frame 26, which contains the current values of the local variables 28 in the calling procedure as well as the return pointer 30 to the calling procedure. The size of this data object depends completely upon the specific details of the calling procedures. As an example of a typical system, the data stored in the CP Object 20 might be the contents of 12 registers and an argument list of 5 arguments both totalling 17 words. The procedure frame could contain, for example, six local variables plus a single return pointer, for a total of seven words. Thus in the prior art, a total of 24 words would be saved to the system stack 14 every time a procedure call is made.

According to the present invention, only a portion of this information is saved at the time a procedure call is made. Then, if it becomes necessary, the remaining information can be saved to the stack 14. In many cases, events will transpire such that it is not necessary to save certain information to the stack 14, and thus the present invention will have saved the time required to save such information to the stack 14.

In the specific embodiment of the present invention, the procedure frame 26 is always stored on the system stack at the time a procedure is entered. The CP Object 20 is not so stored, however. The argument list 24 is saved to the PDL stack, which is a very fast operation, and the registers are not saved at all. If it becomes necessary late, the registers and argument list will be saved to the system stack 14, but if it is not necessary to save the CP object 20, the time which would have been used to save the registers is saved, and the argument list 24 can easily be removed from the PDL stack 16. Since the PDL stack 16 is very fast, the time required to do this is very small.

In order to understand the situation in which it is not necessary to save the CP Object 20, it will be necessary to explain how a procedure executes. Table I shows the structure of a hypothetical procedure.

```
            TABLE I

            ---------------------------------


            entry point
                    head   :-   body (1)
                    head   :-   body (2)
                    head   :-   body (3)
                    head   :-   body (4)
            exit point

            ---------------------------------
```

Execution of a PROLOG program consists in large part of entering procedures. checking in order the clauses contained within the procedure, and successfully returning from the procedure as soon as a clause returns a successful match. If no matches are found, the procedure returns a non-successful result. Each of the clauses in turn usually invoke one or more procedures.

The purpose of the CP Object 20 is to allow the next clause in the procedure to be checked if a previous clause fails. Table I shows a procedure having four clauses, with each clause having an identical head portion. Execution of the procedure involves executing body(1) and successfully leaving the procedure if body (1) returns successfully. If body(1) does not return successfully, it is necessary to reset the processor 10 to the state it was in when the procedure was entered, and then try body(2). The information in the CP Object 20 is used to accomplish this. If body(2) is also unsuccessful, the CP Object 20 is used to reset the processor and body(3) is checked. It will be seen that the information of the CP Object 20 is that which is necessary to accomplish the backtracking feature of PROLOG-type languages. When the procedure terminates, either by a successful return from one of the bodies, or simply reaching the exit point, which indicates the entire procedure was unsuccessful the procedure frame 26 is used to return to the calling procedure and to restore the local variabes for that procedure. The procedure frame 26 consists of information which is similar to that used when procedure calls are made in other languages such as LISP or Pascal. The CP Object 20 contains that information needed to operate the backtracking feature which is peculiar to PROLOG-type languages.

The present invention consists of not storing the CP Object 20 onto the system stack unless it is necessary. In many cases, a simple test contained within body (1) will indicate that it is unnecessary to try the remaining clauses in the procedure in order to determine if that procedure is successful. This is often referred to as the procedure becoming deterministic. If this is the case, whether or not the procedure is successful depends entirely upon the content of body (1). Since there will be no backtracking within the procedure, any time and effort used to save a CP Object 20 has been wasted. In the present invention, the CP Object 20 is not saved until it is determined that a backtracking operation might be necessary.

Figure 3 shows the type of statements which are relevant to such a determination. Figure 3(a) shows a single clause, consisting of a head 40 and a body 42. The body consists of TEST1 44, a cut 46, shown as an exclamation mark, and a procedure call 48. TEST1 is a PROLOG built-in procedure, such as an arithmetic or logical comparison, which does not affect the values of the registers 22. TEST1 may affect the values of the argument list 24, which requires that it be saved. PROCEDURE1 can be any PROLOG procedure call. Execution of the clause of Figure 3(a) proceeds in the following manner: The test TEST1 is executed. If TEST1 fails, the body 42 of the clause as a whole must fail, and it is unnecessary to execute any more statements within the body 42. Therefore, execution will pass to the next clause in the procedure (not shown). Since TEST1 was of a simple type which did not modify any of the registers 22, it can be seen that, as yet, it has not been necessary to save the CP Object 20 to the stack 14. The argument list is restored from the values saved on the PDL stack 16, since they may have been corrupted by execution of TEST1.

If TEST1 is successful, the following command is a cut command 46. The cut command is a signal to the system that this clause, and only this clause, is to be executed to determine whether or not the procedure terminates successfully. That is, this is a command which requires that no more backtracking be undertaken within this procedure, thus making the procedure deterministic. In prior art systems, the operation upon encountering a cut command would be to remove the already saved CP Object 20 from the stack. Since in the current invention the CP Object 20 has not been saved to the stack, it is necessary only to remove the argument list 24 from the PDL stack 16. Since the PDL stack 16 is very fast compared to main memory 12, this is a comparatively fast operation. In addition, in the present invention, no time had been spent in saving the CP Object 20 to main memory at all. After the cut command 46 is executed, PROCEDURE1 48 is then executed in a normal manner. Upon completion of PROCEDURE 1, the procedure which contains the clause of Figure 3(a) is exited.

Figure 3(b) shows one statement of the type which would require the CP Object 20 to be saved. TEST2 50 is a simple test of the type of TEST1, and if it is successful PROCEDURE2 52 is executed. However, since there is no cut command, if PROCEDURE2 52 is not successful the clauses following that of Figure 3-(b) will be executed after backtracking. Thus, prior to entering PROCEDURE2 52, it is necessary that the CP Object 20 be saved. The CP Object 20 is saved to the stack in the normal manner, and execution procedures as in prior art systems.

If the compiler detects that any particular procedure can not become deterministic, saving of the CP Object to the stack 14 need not be delayed. This will happen, for example, if the cut command is not used anywhere in the procedure. In such cases, the compiler will operate in the same manner as prior art systems.

## TECHNICAL ADVANTAGES

It can thus be seen that the present invention delays the saving of some information to the system stack 14 until it is determined that such a save is necessary. If the saving of this information is necessary it is done at a later time, but the system otherwise proceeds in the well known standard manner. If the save turns out not to be necessary, time has not been wasted in saving unneeded information to the system stack 14.

The actual compiler and processor we used are not important to the present invention, but the present invention has been implemented on a compiler developed to run on a Texas Instruments Explorer. The compiler, which is itself written in PROLOG, executed from 30% to 40% faster when saving of the CP Object 20 was delayed. Many other PROLOG application programs also ran 30% to 40% faster when the present invention was implemented.

It will be appreciated that, in those cases where the CP Object 20 must be saved to the stack 14 anyway, a small amount of extra work is undertaken when saving the argument list 24 to the PDL stack 16 upon entry into the procedure. The fact that this is a fairly small penalty to be paid can be illustrated in connection with the above-described Explorer implementation. On the Explorer, the PDL stack 16 acts as a register within the processor 10 and data transfer from the argument list to the PDL stack 16 occurs at the rate of 1 word per clock cycle. In contrast, there is a minimum of 6 clock cycles to save each word to the system stack 14 in main memory 12. This time increases greatly whenever a page fault is encountered in

4

main memory 12, necessitating a search of the mass storage disk. In the example given earlier, having 12 registers and 5 objects in the argument list, saving to system stack memory 14 requires a minimum of (6' 17) or 104 clock cycles. A page fault would incur a penalty of typically many thousands of clock cycles. Compared to this large overhead in normal operation, the extra 5 clock cycles needed to save the argument list to the PDL stack becomes insignificant. Even if only a small percentage of procedures incorporate a cut command, and are therefore candidates to be more quickly executed by not saving the CP Object 20, overall system performance can be significantly improved.

It will be appreciated that computer systems having different configurations can take advantage of the present invention. For example, systems that don't have a PDL stack 16 can store the argument list 24 elsewhere, such as any dedicated memory location, on the main stack 14, or in other registers especially reserved for this purpose, and still take advantage of the temporal savings of delaying saving the register values 22 to the stack.

## Claims

1. A method for making non-deterministic procedure calls in a programming language using backtracking in a computer system, comprising the steps of:
   (a) saving a first portion (26) of information necessary to return from the procedure calls;
   (b) entering the procedure;
   (c) after step (b), determining whether a second portion (20) of information necessary to do backtracking must also be saved; and
   (d) saving or discarding the second portion of information in accordance with the determination of step (c).

2. A method according to claim 1, wherein the first portion of information comprises local variables (28) of the calling procedure and a return pointer (30).

3. A method according to claim 1 or claim 2, wherein the second portion (20) of information comprises contents of current system registers (22) and arguments (24) which have been passed to the called procedure.

4. A method according to claim 1, 2 or 3 for making non-deterministic procedure calls in a computer system having a stack, wherein said first portion in step (a) is a procedure frame (26).

5. A method according to any one of the preceding claims for making non-deterministic procedure calls in a computer system having a stack (14), wherein step (c) comprises the step of determining whether or not the called procedure is deterministic.

6. A method according to any one of the preceding claims wherein said second portion exists in the computer system at the time of entering the called procedure and includes information necessary to do backtracking.

7. A method according to any one of the preceding claims further comprising the step of:
   (e) prior to step (c), saving an argument list to a special memory location.

## Patentansprüche

1. Ein Verfahren Zur Ausführung von nichtdeterministischen Prozeduarufrufen in einer eine Zutückerfolgung verwendenden Programmiersprache in einem Computersystem, das die Schritte enthält:
   (a) Sichern eines ersten Informationmbschrittes (26), der für die Rückehr aus den Prozeduraufrufen notwendig ist;
   (b) Eintreten in die Prozedur;
   (c) nach dem Schritt (b) Bestimmen, ob ein zweiter Informationsabschnitt (20), der für die Ausführung der Zurückverfolgung notwendig ist, ebenfalls gesichert werden muß;und
   (d) Sichern oder Verwerfen des zweiten Informationsabschnittes entsprechend der Bestimmung des Schrittes (c).

**2.** Ein Verfahren gemäß Anspruch 1, bei dem der erste Informationsabschnitt lokale Variablen (28) der aufrufenden Prozedur und einen Rückkehrzeiger (30) enthält.

**3.** Ein Verfahren gemäß Anspruch 1 oder Anspruch 2, bei dem der zweite Informationsabschnitt (20) Inhalte von aktuellen Systemregistern (22) sowie Argumente (24) enthält, die zu der aufgerufenen Prozedur geleitet worden sind.

**4.** Ein Verfahren gemäß Anspruch 1, 2 oder 3 zur Ausführung von nichtdeterministischen Prozeduraufrufen in einem einen Stapelspeicher aufweisenden Computersystem, bei dem der erste Abschnitt im Schritt (a) ein Prozedurrahmen (26) ist.

**5.** Ein Verfahren gemäß einem der vorangehenden Ansprüche zur Ausführung von nichtdeterministischen Prozeduraufrufen in einem einen Stapelspeicher (14) aufweisenden Computersystem, bei dem der Schritt (c) den Schritt umfaßt, in dem bestimmt wird, ob die aufgerufene Prozedur deterministisch ist.

**6.** Ein Verfahren gemäß einem der vorangehenden Ansprüche, bei dem der zweite Abschnitt im Zeitpunkt des Eintretens in die aufgerufene Prozedur vorhanden ist und Information enthält, die für die Ausführung der Zurückverfolgung notwendig ist.

**7.** Ein Verfahren gemäß einem der vorangehenden Ansprüche, das ferner den Schritt enthält:
(e) vor dem Schritt (c) Sichern einer Argumentliste in einem besonderen Speicherbereich.

**Revendications**

**1.** Procédé pour établir des appels non déterministes de procédure dans un langage de programmation utilisant une restauration après branchement dans un système informatique, comprenant les étapes suivantes :
(a) sauvegarder une première portion (26) d'informations nécessaires pour revenir des appels de procédure ;
(b) entrer dans la procédure ;
(c) après l'étape (b), déterminer si une deuxième portion (20) d' informations nécessaires pour effectuer la restauration après branchement doit être sauvegardée ; et
(d) sauvegarder ou éliminer la deuxième portion d'informations en fonction du résultat de l'étape (c).

**2.** Procédé selon la revendication 1, dans lequel la première portion d'informations comprend des variables locales (28) de la procédure appelante et un pointeur de retour (30).

**3.** Procédé selon la revendication 1 ou 2, dans lequel la deuxième portion (20) d'informations comprend le contenu des registres courants de système (22) et des arguments (24) qui ont été transmis à la procédure appelée.

**4.** Procédé selon la revendication 1, 2 ou 3 pour établir des appels non déterministes de procédure dans un système informatique ayant une pile, dans lequel ladite première portion dans l'étape (a) est un cadre de procédure (26).

**5.** Procédé selon l'une quelconque des revendications précédentes pour établir des appels non déterministes de procédure dans un système informatique ayant une pile, dans lequel l'étape (c) comprend l'étape consistant à déterminer si la procédure appelée est déterministe ou non.

**6.** Procédé selon l'une quelconque des revendications précédentes, dans lequel ladite deuxième portion existe dans le système informatique au moment d'entrer dans la procédure appelée et comprend les informations nécessaires à la restauration après branchement.

**7.** Procédé selon lune quelconque des revendications précédentes, comprenant en outre l'étape suivante :
(e) avant l'étape (c), sauvegarder une liste d'arguments dans un emplacement spécial de mémoire.

Fig. 1

Fig. 2

Fig. 3a

Fig. 3b